# EUROPEAN PATENT APPLICATION

(11) **EP 4 806 765 A1**
(43) Date of publication of application: **16.09.2026**
(21) Application number: 26157755.5
(22) Date of filing: 11.02.2026
(51) Int. Cl.: B62D 25/08

(54) **VEHICLE BODY STRUCTURE OF VEHICLE**

(30) Priority: 10.03.2025 JP 2025037219
(71) Applicant: MAZDA MOTOR CORPORATION, Hiroshima 730-8670 (JP)
(72) Inventor: Shimanaka, Tsuneki, Aki-gun, Hiroshima, 730-8670 (JP)
(74) Representative: Lorenz Seidler Gossel Part. mbB

(57) **Abstract**

[The present invention relates to a dash panel 2 that separates a cabin CR and a power unit room PR in a vehicle front-rear direction, a pair of left and right front frames 14 extending in a vehicle front direction from the dash panel 2, a cowl structure 12 provided along a vehicle width direction as a gutter for receiving water flowing along a front windshield, and an auxiliary machine provided on an outer side in the vehicle width direction of an outer end portion in the vehicle width direction of the cowl structure 12 in front of the dash panel 2 are provided. An upper wall portion 14Ra of the rear portion 14R of the front frame 14 is provided below a lower end of the auxiliary machine, and the upper wall portion 14Ra is provided along the outer side in the vehicle width direction of the auxiliary machine from the outer end portion in the vehicle width direction of the cowl structure 12 in a manner to constitute a flow path FP for discharging water flowing down from the cowl structure 12 to the outside of a vehicle body. The present invention also refers to a vehicle comprising such dash panel 2.

## Description

### [Technical Field]

The present invention relates to a vehicle body structure of a vehicle including: a dash panel that separates a cabin and a front space on a front side of the cabin from each other in a vehicle front-rear direction; and a pair of left and right front frames extending in the vehicle front-rear direction on both left and right sides of the front space, respectively.

### [Background Art]

A cabin front surface portion that extends along a vehicle width direction and an up-down direction in a manner to constitute a front surface of a box-shaped cabin structure in which an outer frame of a cabin is formed in a box shape includes a vehicle body reinforcing member in which at least front end portions, such as front end portions of a dash rein and a side sill in addition to a dash panel and a front end portion of a tunnel frame, are arranged.

Meanwhile, in order to smoothly and efficiently transmit a frontal collision load from a front frame provided in the front space to the vehicle body reinforcing member provided in the cabin front surface portion during a frontal collision of a vehicle (hereinafter referred to as a "frontal collision"), bending angles in the vehicle width direction and the up-down direction of a load transmission path, which runs along a vehicle rear direction from a front frame rear portion to the vehicle body reinforcing member, are preferably small.

Meanwhile, as exemplified in Patent Literature 1, such a structure is known that at least the rear portion of the front frame is cast in a rearward enlarged shape that is gradually enlarged rearward in the vehicle width direction and the up-down direction. In this way, it is expected to enhance load transmission performance to a vehicle rear side from the front frame by transmitting a frontal collision load, which is received by a front portion of the front frame, at the gentle bending angles to the vehicle body reinforcing member that is shifted in the vehicle width direction and the up-down direction from the front portion of the front frame.

There is a case where a cowl structure is disposed along the vehicle width direction directly above the rear portion of the front frame. In the cowl structure, various auxiliary machines such as an electric brake booster and a wiper device are mounted, and the cowl structure serves as a gutter through which water that has flowed in from a front windshield flows to an outer side in the vehicle width direction and is then discharged to the outside of the vehicle body.

Even in such a case, the cowl structure and the auxiliary machines are disposed at heights that do not interfere with each other by adopting such a layout that the cowl structure along the vehicle width direction crosses between the wiper device and the electric brake booster as the auxiliary machines that are arranged on upper and lower sides, for example.

However, in the configuration that the rear portion of the front frame has the rearward enlarged shape as described above, the space that is present directly above the rear portion of the front frame is compressed by the rear portion in the up-down direction. Thus, it may be difficult to satisfy a layout property of the various auxiliary machines and the cowl structure.

### [Citation List]

### [Patent Literature]

[Patent Literature 1] JP2023-537494A

### [Summary of Invention]

### [Technical Problem]

An object of the invention is to provide a vehicle body structure of a vehicle capable of establishing a layout of an auxiliary machine and a drain path while joining a rear end portion of a rear portion of a front frame to a dash panel from a front side without interference between the rear portion and the auxiliary machine.

### [Solution to Problem]

This object is solved by a vehicle body structure according to claim 1 and a vehicle according to claim 15, preferred embodiments are the subject-matter of the subclaims.
The invention is a vehicle body structure of a vehicle including: a dash panel that separates a cabin and a front space in front of the cabin from each other in a vehicle front-rear direction; a pair of left and right front frames, which extend in a vehicle front direction from the dash panel, and rear end portions of which are joined to the dash panel from a front side; a cowl structure provided along a vehicle width direction as a gutter that receives water flowing along a front windshield on a central side in the vehicle width direction of the pair of the left and right front frames; and an auxiliary machine that at least partially coincides with the cowl structure in an up-down direction and the front-rear direction in front of the dash panel and is provided on an outer side in the vehicle width direction of an outer end portion in the vehicle width direction of the cowl structure, in which an upper surface portion, which is near the auxiliary machine and constitutes an upper surface portion of the front frame on a side provided near the auxiliary machine among rear portions of the pair of left and right front frames, is provided below a lower end of the auxiliary machine, and the upper surface portion near the auxiliary machine is provided along the outer side in the vehicle width direction of the auxiliary machine from the outer end portion in the vehicle width direction of the cowl structure in a manner to constitute a drain path, from which water flowing down from the cowl structure is discharged to the outside of a vehicle body.

According to the configuration, it is possible to establish a layout of the auxiliary machine and a drain path while joining a rear end portion of the rear portion of the front frame to the dash panel from the front side without interference between the rear portion and the auxiliary machine.

More specifically, the auxiliary machine is provided at substantially the same height as the cowl structure on the outer side in the vehicle width direction of the cowl structure provided along the vehicle width direction in front of the central portion in the vehicle width direction of the dash panel. Accordingly, by providing the upper surface portion near the auxiliary machine from the outer end portion in the vehicle width direction of the cowl structure along the outer side in the vehicle width direction of the auxiliary machine directly below the auxiliary machine, it can be formed as the drain path, which receives water discharged from the outer end portion in the vehicle width direction of the cowl structure as a gutter from below, and from which water is discharged to the outside of the vehicle body on the outer side in the vehicle width direction of the auxiliary machine while bypassing the auxiliary machine.

As described above, by forming the drain path for discharging water flowing along the front windshield to the outside of the vehicle body in cooperation between the cowl structure and the upper surface portion near the auxiliary machine, it is possible to establish the respective layouts without the interference between the auxiliary machine and the drain path while securing a joint margin of the rear end portion of the front frame to the front surface portion of the dash panel.

As an embodiment of the invention, the auxiliary machine may include an electric brake booster, the rear end portion of the front frame on the side provided near the auxiliary machine may include a rear end portion of the upper surface portion near the auxiliary machine, and an attachment region, in which the electric brake booster is attached to the dash panel from a front side, may be provided above the rear end portion of the upper surface portion near the auxiliary machine.

According to the configuration, since the rear end portion of the upper surface portion near the auxiliary machine does not interfere with the attachment region for the electric brake booster to the front surface of the dash panel, it is possible to secure the joint margin when the rear end portion is joined to the dash panel from the front side.

As a further embodiment of the invention, an inner end portion in the vehicle width direction of the upper surface portion near the auxiliary machine may be located on an inner side in the vehicle width direction of the outer end portion in the vehicle width direction of the cowl structure, and the upper surface portion near the auxiliary machine may be configured to descend toward the outer side in the vehicle width direction from the inner end portion in the vehicle width direction.

According to the configuration, since the inner end portion in the vehicle width direction of the upper surface portion near the auxiliary machine is located on the inner side in the vehicle width direction of the outer end portion in the vehicle width direction of the cowl structure, water discharged from the outer end portion in the vehicle width direction of the cowl structure as the gutter can be reliably received by the upper surface portion near the auxiliary machine from below.

Furthermore, since the upper surface portion near the auxiliary machine is configured to descend from the inner end portion in the vehicle width direction toward the outer side in the vehicle width direction, it is possible to reliably cause received water to flow along the upper surface portion near the auxiliary machine to the outer side in the vehicle width direction of the auxiliary machine and thus to discharge water to the outside of the vehicle body.

As a further embodiment of the invention, the upper surface portion near the auxiliary machine may be formed in an inclined surface shape that descends toward the outer side in the vehicle width direction, and, in an intermediate portion in the vehicle width direction of the upper surface portion near the auxiliary machine, a stepped descending portion that descends toward the outer side in the vehicle width direction more rapidly than an inclination angle of a peripheral portion of the intermediate portion may be continuously formed along the front-rear direction.

According to the configuration, since the stepped descending portion that continues along the front-rear direction is formed in the intermediate portion in the vehicle width direction of the upper surface portion near the auxiliary machine, it is possible to form a ridgeline portion that continues along the stepped descending portion by forming the stepped descending portion that continues along the front-rear direction. Accordingly, it is possible to enhance the strength of the upper surface portion near the auxiliary machine. Thus, when the frontal collision load is transmitted rearward in the rear portion of the front frame, it is possible to efficiently transmit it along the ridgeline portion that continues along the front-rear direction in the upper surface portion near the auxiliary machine.

According to a further embodiment of the invention, a front portion of the front frame may be integrally formed to have an H-shaped orthogonal cross section in the front-rear direction by a base plate portion gradually displaced upward to the front from a front end of the upper surface portion near the auxiliary machine and side wall portions (an inner wall portion and an outer wall portion) extending in the up-down direction from both end portions in the vehicle width direction of the base plate portion.

According to the configuration, the base plate portion of the front portion of the front frame can be provided at a higher position than the upper surface portion near the auxiliary machine, and can gradually descend rearward toward the front end of the upper surface portion near the auxiliary machine. Thus, even when the base plate portion is exposed to water, water can flow to the upper surface portion near the auxiliary machine, and drainage performance of the front portion of the front frame can be enhanced.

In addition, since the front portion of the front frame is formed to have the H-shaped orthogonal cross section in the front-rear direction, even in the case where the load that promotes deformation in a rising direction acts when the front portion of front frame, which receives the frontal collision load during the frontal collision, moves rearward, it can resist the load.

As a further embodiment of the invention, the pair of the left and right front frames may be formed with the inner wall portions, each of which extends in an up direction from an inner end in the vehicle width direction of the upper surface portion, the pair of the left and right inner wall portions may be formed as a bridge portion formed to be bent in arch shapes toward a central portion in the vehicle width direction to the rear of the vehicle and are joined to each other in the central portion in the vehicle width direction, and a cowl panel provided in the cowl structure may be joined in a state of being mounted on the bridge portion.

According to the configuration, the cowl panel provided in the central portion in the vehicle width direction can be supported by the bridge portion. Accordingly, since the cowl panel can be prevented from falling from a predetermined position due to vibration or the like during travel of the vehicle, water flowing along the front windshield can further reliably be received by the cowl structure.

Furthermore, since a length of the cowl panel in the vehicle width direction can be made at least equal to or shorter than a length of the bridge portion in the vehicle width direction, it is possible to secure the larger space for arranging the auxiliary machine.

Preferably, the auxiliary machine is provided at substantially the same height as the cowl structure on the outer side in the vehicle width direction of the cowl structure provided along the vehicle width direction in front of the central portion in the vehicle width direction of the dash panel.

In accordance with a preferred embodiment the stepped descending portion that continues along the front-rear direction is formed in the intermediate portion in the vehicle width direction of the upper surface portion near the auxiliary machine.

The base plate portion of the front portion of the front frame may be provided at a higher position than the upper surface portion near the auxiliary machine.

In accordance with a preferred embodiment, the base plate portion of the front portion of the front frame gradually descends rearward toward the front end of the upper surface portion near the auxiliary machine.

Preferably the length of the cowl panel in the vehicle width direction is at least equal to or shorter than the length of the bridge portion in the vehicle width direction.

The cowl panel may be integrally formed by: a lower surface portion that is provided in front of and in a central portion in the vehicle width direction of an upper dash panel and that extends in the front-rear direction; a front vertical wall portion that rises in a vertical wall shape from a front end of the lower surface portion; and a front upper surface portion that protrudes forward from an upper end of the front vertical wall portion.

Preferably, the cowl structure includes an upper dash panel, a cowl panel and a cowl grill.

The cowl grill may be provided across an entire length of the upper dash panel in the vehicle width direction.

The present invention further relates to a vehicle comprising a vehicle body structure according to the invention.

### [Advantageous Effects of Invention]

The invention can provide the vehicle body structure of the vehicle capable of establishing the layout of the auxiliary machine and the drain path while joining the rear end portion of the rear portion of the front frame to the dash panel from the front side without interference between the rear portion and the auxiliary machine.

### [Brief Description of Drawings]

[FIG. 1] FIG. 1 is a perspective view in which a main portion of a vehicle including a vehicle body structure according to the present embodiment is seen from a front side and a left side of a vehicle body.
[FIG. 2] FIG. 2 is a perspective view in which the main portion of the vehicle in FIG. 1 is seen from the front side and the left side of the vehicle body.
[FIG. 3] FIG. 3 is a side view in which the main portion of the vehicle including the vehicle body structure according to the present embodiment is seen from a right side.
[FIG. 4] FIG. 4 is a cross-sectional view of the main portion of the vehicle that is taken along line A-A in FIG. 3 and seen from the front side and the right side of the vehicle body.
[FIG. 5] FIG. 5 is a cross-sectional view of the main portion of the vehicle that is taken along line B-B in FIG. 3.
[FIG. 6] FIG. 6 is a perspective view in which the cast body in the present embodiment is seen from a rear side and the right side of the vehicle body.
[FIG. 7] FIG. 7 is a perspective view in which the main portion of the vehicle including the vehicle body structure of a vehicle according to the present embodiment is seen from a lower side and the left side of the vehicle body.
[FIG. 8] FIG. 8 is a perspective cross-sectional view of the main portion of the vehicle that is taken along line C-C in FIG. 3 and seen from a vehicle width outer side.
[FIG. 9] FIG. 9 is a vertical cross-sectional view of a rear portion of the cast body, and illustrates a casting step of the cast body in the present embodiment.

### [Description of Embodiments]

As an embodiment of the invention, a description will hereinafter be made on a vehicle body structure of the vehicle according to the invention applied to a front-engine, rear-wheel-drive (FR) sports car with reference to the drawings. In the drawings, an arrow Fr indicates a vehicle front direction, an arrow U indicates a vehicle up direction, an arrow W indicates a vehicle width direction, OUT indicates an outer side in the vehicle width direction (also referred to as a "vehicle width outer side"), and IN indicates an inner side in the vehicle width direction (also referred to as a "vehicle width inner side").

Since the vehicle body structure in the present embodiment is a substantially bilaterally symmetrical structure, a description will be centered on an apron frame 18 on a vehicle right side and a front frame 14. In the following description, each of front, rear, right, left, up, and down directions indicates a respective direction with a vehicle body being a reference unless otherwise specified, and "rein" stands for "reinforcement".

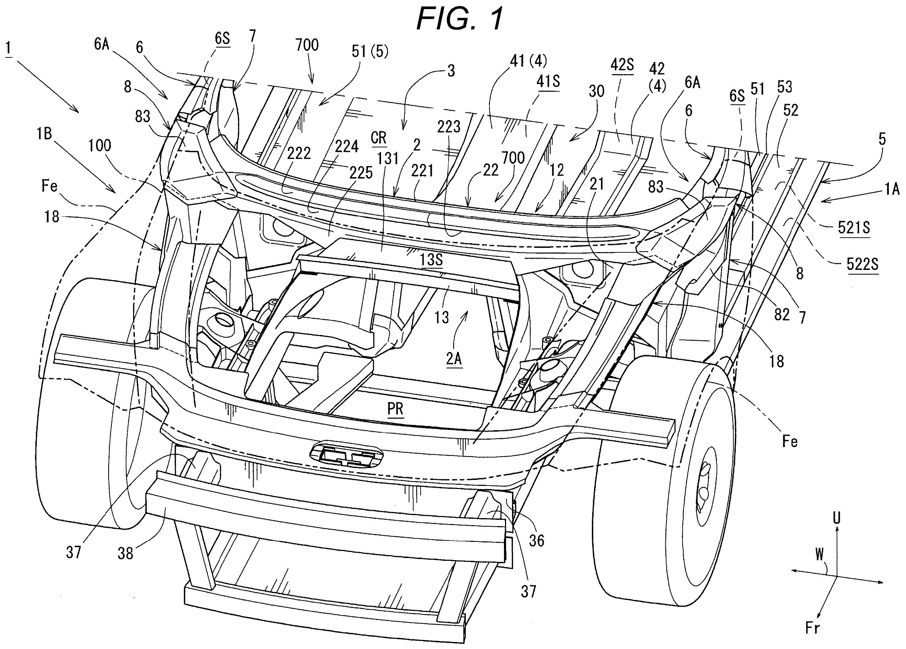

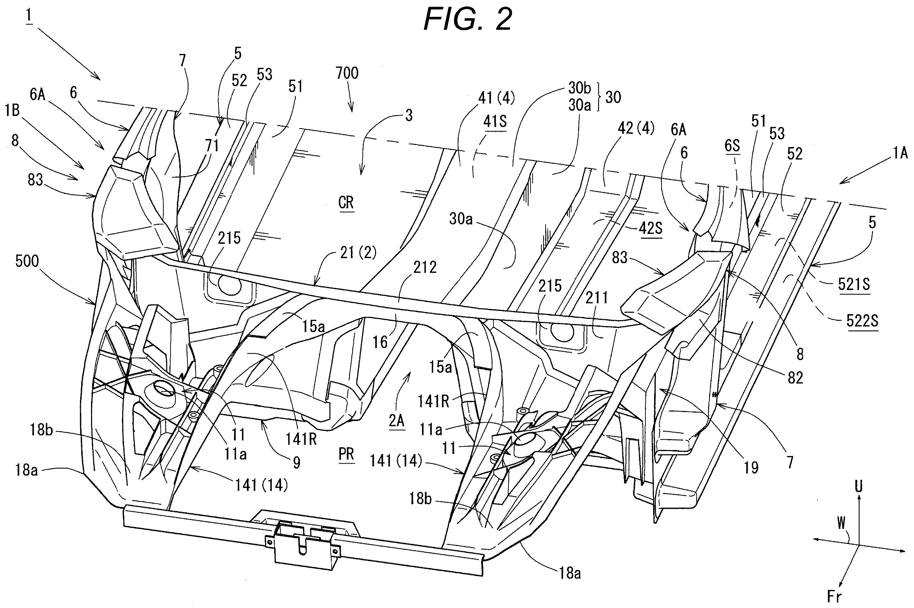

As illustrated in FIGs. 1 and 2, a vehicle 1 in the present embodiment includes a vehicle body front structure 1B and a box-shaped cabin structure 1A on front and rear sides, respectively.

The box-shaped cabin structure 1A includes various vehicle reinforcing members and panel members constituting an outer frame of the cabin, and has a cabin CR therein by combining these elements in a box shape. The vehicle body front structure 1B is formed in a body front space provided in front of a front surface portion of such a box-shaped cabin structure 1A. The box-shaped cabin structure 1A will be described prior to the description of the vehicle body front structure 1B.

### (Outline of Box-Shaped Cabin Structure 1A)

The box-shaped cabin structure 1A includes, as the various vehicle reinforcing members and the panel members, a dash panel 2, a floor panel 3, a tunnel frame 4, a side sill 5, a front pillar 6, a hinge pillar 7, a cowl side rein 8, a torque box 9, and a dash lower rein 10.

### (Dash Panel 2)

As illustrated in FIGs. 1, 2, and 4, the dash panel 2 is provided in a vertical wall shape that separates the cabin CR inside the box-shaped cabin structure 1A and a power unit room PR in the front space thereof from each other in a front-rear direction.

Since the vehicle 1 in the present embodiment employs the front-engine, rear-wheel-drive system as described above, the power unit room PR is an engine room, and an engine (not illustrated) of a vertical arrangement type is arranged. However, in the present invention, a configuration of a power unit is not particularly limited as long as a power source of the vehicle is provided, and may include a motor and a speed reducer in a case of an electric vehicle, for example.

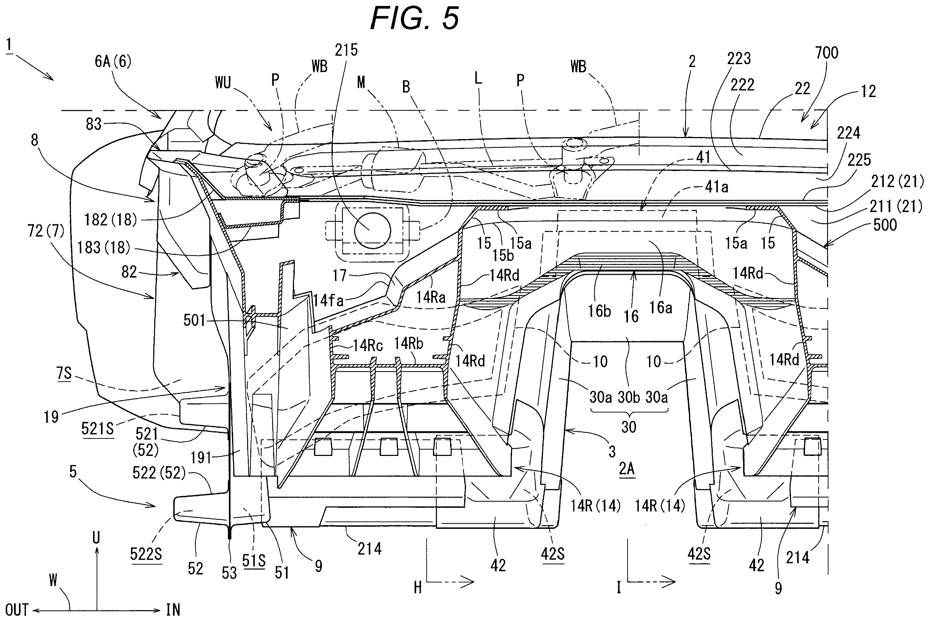

As illustrated in FIGs. 1 and 5, the dash panel 2 includes a lower dash panel 21 and an upper dash panel 22 provided above the lower dash panel 21. As illustrated in FIG. 2, the lower dash panel 21 includes: a vertical wall portion 211 along an up-down direction and the vehicle width direction; a forward extending portion 212 that is formed to be bent in a manner to protrude forward from an upper end of the vertical wall portion 211; a vehicle width outer end flange portion (not illustrated) that is formed to be bent in a manner to protrude rearward from each end of the vertical wall portion 211 in the vehicle width direction; and a slant portion 214 that is slanted downward to the rear from a lower end of the vertical wall portion 211.

As illustrated in FIG. 1, the upper dash panel 22 is installed in the forward extending portion 212 at an upper end of the lower dash panel 21, and is substantially formed in an S-shape in a side view along the vehicle width direction over substantially an entire length of the lower dash panel 21.

More specifically, as illustrated in FIG. 2, the upper dash panel 22 is substantially formed in the S-shape in the side view by: an upper surface portion 221, an entire portion of which excluding both outer ends in the vehicle width direction is inclined downward to the front from a rear end in a front-low, rear-high shape; a bulging portion 222 that bulges forward and has an upper end continuous with a lower end of the upper surface portion 221; a vertical wall portion 224 that extends downward from a lower end of the bulging portion 222 via a corner rounded portion 223; and a lower surface portion 225 that extends forward from a lower end of the vertical wall portion 224. In addition, both of the outer end portions of the upper dash panel 22 in the vehicle width direction are integrally formed with outer edge flange portions (not denoted by reference signs), each of which extends rearward to the outer side in the vehicle width direction over a substantially entire length in the vehicle width up-down direction.

In the upper dash panel 22, the lower surface portion 225 is joined to the forward extending portion 212 of the lower dash panel 21 described above by spot welding or the like, and the upper surface portion 221 thereof is joined to a lower portion of a front windshield (not illustrated) inclined in a front-down direction via an adhesive (not illustrated). In this way, the upper dash panel 22 supports the front windshield. As illustrated in FIG. 1, the left and right outer edge flange portions of the upper dash panel 22 are joined to a cowl side rein 8, which will be described below, from an inner side in the vehicle width direction.

### (Floor Panel 3)

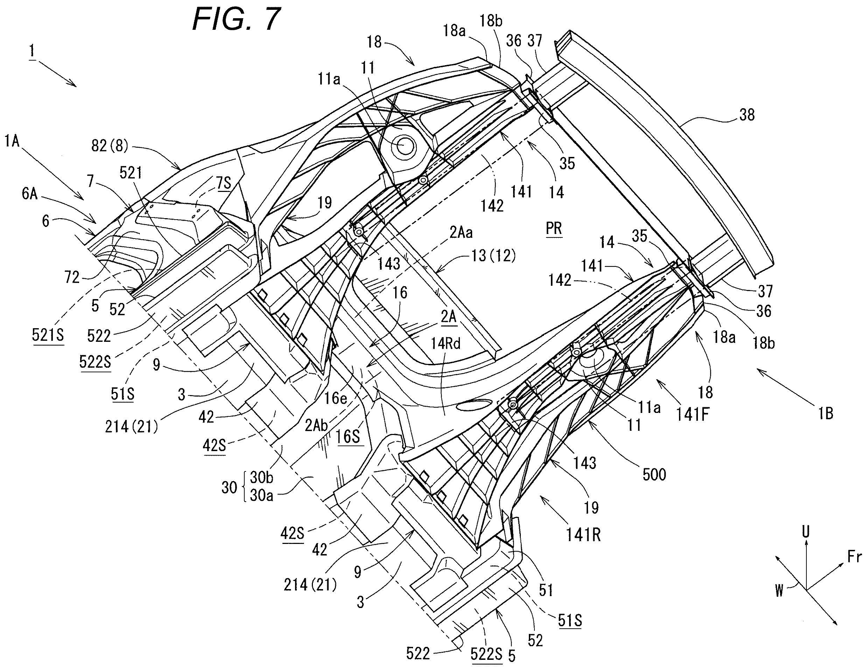

The floor panel 3 has a front end portion that is integrally joined to a rear end portion of the slant portion 214 of the lower dash panel 21, and horizontally extends rearward from the front end portion in a manner to form a bottom surface of the cabin (See FIG. 7(b)).

In addition, in a central portion of the floor panel 3 in the vehicle width direction, a tunnel portion 30 is formed along the front-rear direction as a unit or integrally.

As illustrated in FIGs. 2 and 5, the tunnel portion 30 is formed such that an orthogonal cross section in the front-rear direction bulges upward in a gate shape by a pair of left and right side surface portions 30a and an upper surface portion 30b connecting upper ends of the side surface portions 30a in the vehicle width direction.

### (Tunnel Frame 4)

As illustrated in FIGs. 1, 2, and 7, the tunnel frame 4 is formed in or near the tunnel portion 30, and includes an upper tunnel frame 41 and a tunnel side frame 42. As a backbone frame extending in the front-rear direction, the upper tunnel frame 41 is joined to an upper portion of the tunnel portion 30. The upper tunnel frame 41 is substantially formed in a U-shape that is opened downward in a cross section orthogonal to the front-rear direction, and lower end portions on both of the left and right sides are joined to upper portions of the left and right side surface portions 30a, respectively. In this way, between the upper tunnel frame 41 and the upper surface portion 30b of the tunnel portion 30, a closed cross-section 41S is formed to extend rearward from a front end of the tunnel portion 30 over an entire length in the front-rear direction.

In addition, the tunnel side frame 42 is disposed at a lower end portion on each of the left and right outer sides of the tunnel portion 30, and has a closed cross-section 42S that extends in the front-rear direction.

Here, as illustrated in FIGs. 1, 2, 4, 5, and 7, a tunnel opening 2A that bulges upward is formed in a central portion in the vehicle width direction of a lower portion of the lower dash panel 21 described above. This tunnel opening 2A is joined to a front end of the tunnel portion 30 that is formed in the central portion of the floor panel 3 in the vehicle width direction (see FIG. 7). A space under the tunnel portion 30 and the power unit room PR communicate with each other in the front-rear direction via the tunnel opening 2A.

### (Side Sill 5)

As illustrated in FIGs. 1, 2, 4, 5, and 7, the side sill 5 is disposed on both left and right end portions of the floor panel 3 in the vehicle width direction, and has closed cross-sections 51S, 521S, 522S extending in the front-rear direction of the vehicle.

This side sill 5 includes: an inner side sill 51 over an entire length of the side sill 5 in the front-rear direction; and an outer side sill 52 and a side sill rein 53, each of which is arranged on the outer side of the inner side sill 51 in the vehicle width direction.

The inner side sill 51 is formed over an entire length of the side sill 5 in the up-down direction in a hat-shaped cross section that is open outward in a vehicle body width direction. The side sill rein 53 is a plate-shaped steel panel member that is interposed between the inner side sill 51 and the outer side sill 52, and is substantially formed linearly along the up-down direction over an entire length of the side sill 5.

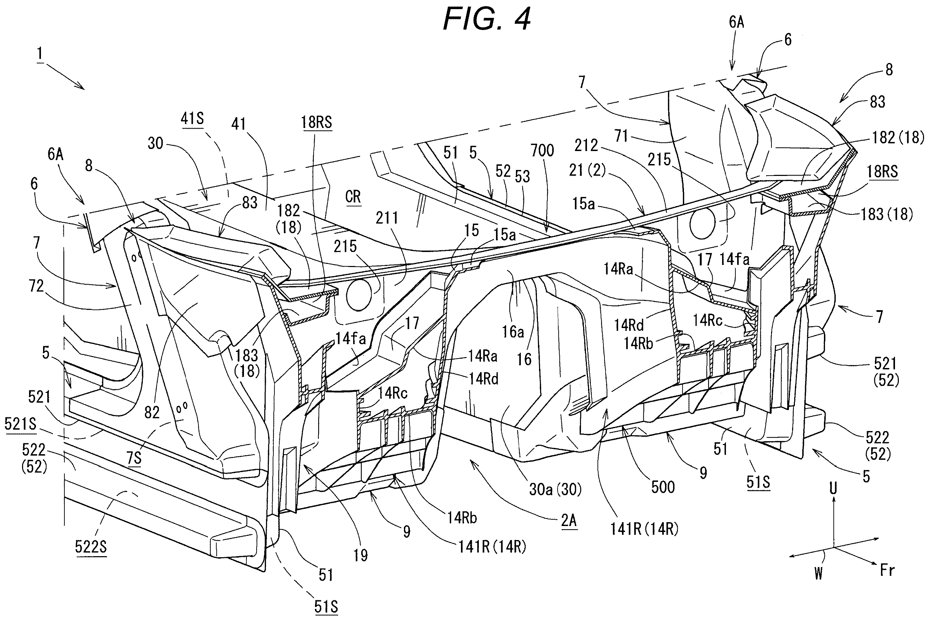

As illustrated in FIG. 4, on the outer side of the inner side sill 51 in the vehicle width direction, the outer side sill 52 includes: an upper outer side sill 521 provided in an upper portion of the side sill 5; and a lower outer side sill 522 provided in a lower portion thereof. Each of the upper outer side sill 521 and the lower outer side sill 522 is formed to have a hat-shaped cross section that is open inward in the vehicle body width direction.

Each of these elements 51, 521, 522 of the side sill 5 is formed by pressing a metal panel member.

The inner side sill 51 has an outer end portion in the vehicle width direction that is joined to the side sill rein 53 from the inner side in the vehicle width direction, and, at a position near the inner side in the vehicle width direction of the side sill 5, forms an inner side sill closed cross-section 51S over substantially the entire length of the side sill 5 in the front-rear direction.

An inner end portion of the lower outer side sill 522 in the vehicle width direction is joined to a lower portion of the side sill rein 53.

Thus, between the lower outer side sill 522 and the side sill rein 53, a lower side sill closed cross-section 522S is formed over substantially the entire length in the front-rear direction at a position near the outer side in the vehicle width direction of the lower portion of the side sill 5.

An inner end portion of the upper outer side sill 521 in the vehicle width direction is joined to an upper portion of the side sill rein 53.

Thus, between the upper outer side sill 521 and the side sill rein 53, an upper side sill closed cross-section 521S is formed over substantially the entire length in the front-rear direction at a position near the outer side in the vehicle width direction of the upper portion of the side sill 5.

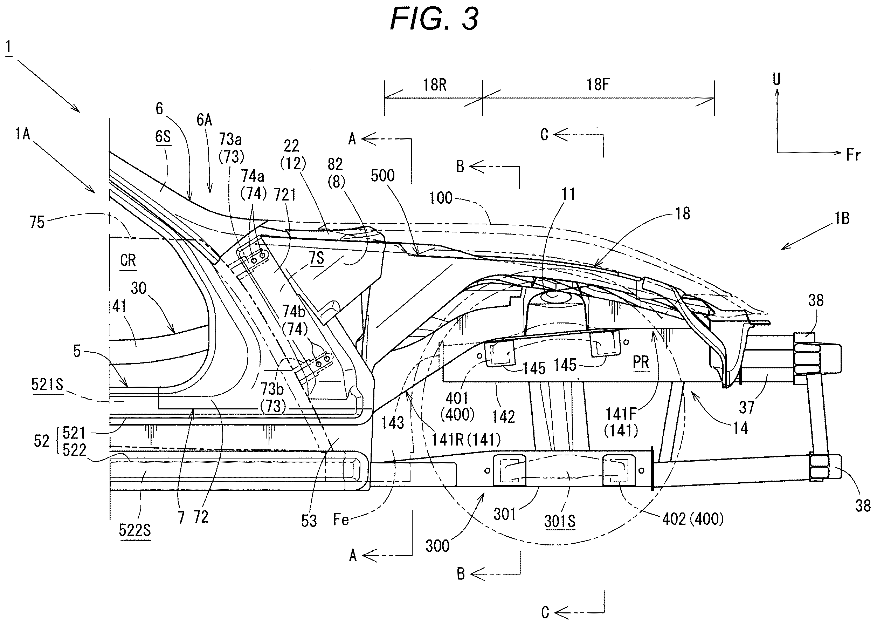

As illustrated in FIGs. 3, 4, and 7, the front portion of the side sill 5 extends forward from a front pillar base portion 6A described below and the lower dash panel 21. The inner side sill closed cross-section 51S, the upper side sill closed cross-section 521S, and the lower side sill closed cross-section 522S described above as the side sill closed cross-sections 51S, 521S, 522S are formed over the substantially entire length in the front-rear direction to the substantially front end portion of the side sill 5. Here, each of the side sill closed cross-sections 51S, 521S, 522S has a front surface portion in the front end portion of the side sill 5 and is closed in the front-rear direction.

### (Front Pillar 6)

As illustrated in FIGs. 1 and 2, the front pillar 6 extends along a front-down direction by joining an outer front pillar (not illustrated) and an inner front pillar (not illustrated) at a side edge that corresponds to each of left and right sides of an opening for disposing a front windshield (not illustrated) that is inclined in the front-down direction. The front pillars 6 are vehicle body reinforcing members, each of which has a front pillar closed cross-section 6S inclined in the front-down direction, and which support the front windshield from both of the left and right sides via fillers.

### (Hinge Pillar 7)

As illustrated in FIGs. 1, 2, 3, and 4, on each of the left and right sides of the lower dash panel 21, the hinge pillar 7 extends in the up-down direction between a base portion of the front pillar 6 (the front pillar base portion 6A) and the side sill 5.

As illustrated in the drawings, by joining an inner hinge pillar 71 and an outer hinge pillar 72, the hinge pillar 7 has a hinge pillar closed cross-section 7S that extends in the up-down direction therebetween.

A lower end portion of the outer hinge pillar 72 is joined to the outer side sill 52 (a shoulder portion of the upper outer side sill 521).

Here, in a front portion of the side surface of the outer body portion 721, hinge attachment portions 74 (74a, 74b) are provided on upper and lower sides for attachment of door hinges 73 (73a, 73b) (see FIG. 3).

Here, in the outer hinge pillar 72, as illustrated in FIG. 3, the upper and lower hinge attachment portions 74 (74a, 74b) are arranged such that the lower hinge attachment portion 74b is located in front of the upper hinge attachment portion 74a in a manner to correspond to the outer body portion 721 that is arranged to be inclined downward to the front in the vehicle side view as described above.

Then, in the upper and lower hinge attachment portions 74 (74a, 74b), for example, a swing door 75 as a flipping side door, in which a door rear portion is displaced outward and upward when the door is opened like a scissors door or a butterfly door, is supported via the upper and lower door hinges 73 (73a, 73b) (see FIG. 3).

### (Cowl Side Rein 8)

As illustrated in FIGs. 1, 2, 3, and 4, the cowl side rein 8 is located on the outer side of an outer end of the lower dash panel 21 in the vehicle width direction, and is provided near the front pillar base portion 6A located on an upper end of the hinge pillar 7.

The cowl side rein 8 extends forward from an upper front side of the outer body portion 721 of the hinge pillar 7 in a manner to connect a rear end portion of the apron frame 18 described below in a braced manner (see FIGs. 1, 2, 3, and 4). The cowl side rein 8 is formed to have a substantially closed cross-sectional shape that extends in the front-rear direction by an inner side panel forming a vehicle width inner wall, an outer panel 82 forming a vehicle width outer wall and a lower wall (a bottom surface), and an upper panel 83 forming an upper wall.

### (Torque Box 9)

As illustrated in FIGs. 2, 4, 5, and 7, the torque box 9 is a pair of left and right vehicle body reinforcing members, each of which is joined to a front surface of the respective slant portion 214 of the lower dash panel 21 and has a closed cross-section 9S extending in the vehicle width direction with a front surface of the slant portion 214, and couples the front end portion of the tunnel side frame 42 and the front end portion of the side sill 5 in the vehicle width direction on each of the left and right sides.

### (Dash Lower Rein 10)

As illustrated in FIG. 5, the dash lower rein 10 is joined to an inner side surface of the cabin CR of the dash panel 2 and forms a closed cross-section 10S with the inner side surface of the cabin CR.

The closed cross-section 10S is configured to overlap a rear end of a front frame rear portion 14R of a box-shaped hollow body in a vehicle rear view, and to extend from a rear end portion of the front frame 14 to the hinge pillar 7 and the inner side sill 51 immediately below the hinge pillar 7 in a manner to continue downward to the outer side in the vehicle width direction (see the drawings).

As illustrated in the drawing, an outer edge flange portion 10a in the vehicle width direction of the dash lower rein 10 is joined to a front portion of the inner side sill 51 and the inner hinge pillar 71 from the inner side in the vehicle width direction via the vehicle width outer end flange portion of the dash panel 2. In this way, the closed cross-section 10S of the dash lower rein 10 is coupled to the hinge pillar closed cross-section 7S and the inner side sill closed cross-section 51S in the vehicle width direction.

Next, the vehicle body front structure 1B will be described.

As illustrated in FIGs. 1 and 2, the vehicle body front structure 1B includes: a bonnet 100 covering the power unit room PR, which is provided in front of the dash panel 2, from above; a front fender Fe that covers it from the side; a front bumper face (not illustrated) that covers it from the front; a suspension housing 11; a front subframe 300 and a front suspension 400; a cowl structure 12; the front frame 14; and the apron frame 18.

### (Suspension Housing 11)

The suspension housing 11 is disposed at a position separated forward from the lower dash panel 21 described above on each of the left and right sides of the power unit room PR, and the front suspension 400 is accommodated below.

As illustrated in FIG. 2, a damper top portion 11a, to which a suspension damper (not illustrated) provided in the front suspension 400 is attached from below, is provided in a top portion of the suspension housing 11.

### (Front Subframe 300 and Front Suspension 400)

As illustrated in FIG. 3, the front subframe 300 for supporting an upper arm 401 and a lower arm 402 of the front suspension 400 that suspends a front wheel (see FIG. 1) is provided in a lower portion and below each of the left and right paired front frames 14.

The front suspension 400 is disposed on each of the left and right outer sides of the front subframe 300 in a manner to correspond to the left and right front wheels (not illustrated). The front suspension 400 in the present embodiment employs a double wishbone suspension and includes the upper arm 401 provided on the upper side and the lower arm 402 provided on the lower side.

As illustrated in FIGs. 1, 2, and 3, the front subframe 300 is formed in a substantially well curb shape in a plan view by a pair of left and right upper front-rear members extending in the front-rear direction (corresponding to sub frame upper side frame portions); a pair of left and right lower front-rear members 301 extending in the front-rear direction at positions away from the upper front-rear members above; a front cross member (not illustrated) that couples front end portions of the left and right lower front-rear members 301 in the vehicle width direction.

The pair of left and right upper front-rear members and the pair of left and right lower front-rear members 301, and the front cross member, which constitute the front subframe 300, constitute hollow closed cross-sections 14S, 301S extending in an extending direction thereof by joining end portions of the plural steel sheets.

As illustrated in FIG. 3, the upper front-rear member of the front subframe 300 includes an upper arm attachment portion 145 as a suspension support frame on an outer side surface portion, and an inner end portion of the upper arm 401 in the vehicle width direction is attached to the upper arm attachment portion 145 in a manner to be rotatable about an axis extending in the vehicle body front-rear direction.

Similarly, the lower front-rear member 301 of the front subframe 300 has an attachment portion as a suspension support frame for the lower arm 402 on an outer side surface portion, and an inner end portion of the lower arm 402 in the vehicle width direction is attached to the attachment portion in a manner to be rotatable about an axis extending in the vehicle body front-rear direction.

### (Cowl Structure 12)

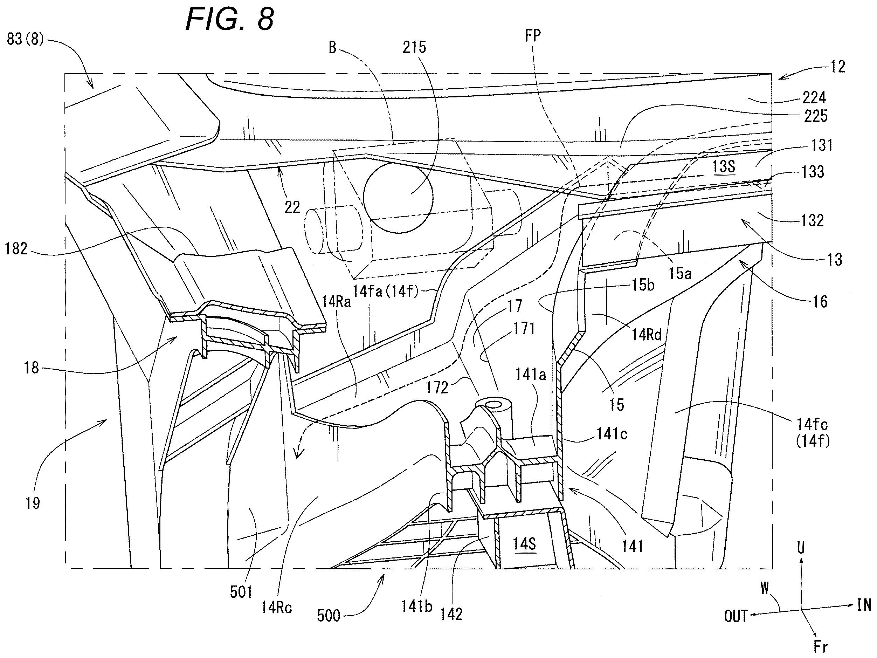

As illustrated in FIGs. 1 and 8, the cowl structure 12 includes the above-described upper dash panel 22, a cowl panel 13 (not illustrated), and a cowl grill (not illustrated).

As illustrated in FIG. 8, the cowl panel 13 is integrally formed by: a lower surface portion 131 that is provided in front of and in a central portion in the vehicle width direction of the upper dash panel 22 and that extends in the front-rear direction; a front vertical wall portion 132 that rises in a vertical wall shape from a front end of the lower surface portion 131; and a front upper surface portion 133 that protrudes forward from an upper end of the front vertical wall portion 132. The lower surface portion 225 of the upper dash panel 22 extends forward from a joint fixed portion with the forward extending portion 212 (see FIG. 2) of the lower dash panel 21, and a rear portion of the lower surface portion 131 of the cowl panel 13 is joined to the lower surface portion 225.

Although not illustrated, at a position in front of the upper dash panel 22 and above the cowl panel 13, the cowl grill is provided across an entire length of the upper dash panel 22 in the vehicle width direction.

The cowl grill is configured to partially cover an upper portion of the cowl panel 13, receives water dropped from the front windshield, collects water in a central portion thereof in the vehicle width direction, and further drops water to the cowl panel 13 side, which constitutes a part of a gutter (that is, a concave space 13S side of the cowl structure 12, which will be described below).

With the vertical wall portion 224 of the upper dash panel 22, the front vertical wall portion 132 of the cowl panel 13, the upper dash panel 22, and the lower surface portion 131 of the cowl panel 13, the above-described cowl structure 12 is formed in a concave shape as the gutter that receives rain water or the like dropped from the front windshield. However, the cowl panel 13 is only disposed in a central portion near the front side of the dash panel 2 in the vehicle width direction, and accordingly, the cowl structure 12 as the gutter is formed only in the central portion in the vehicle width direction.

More specifically, the cowl structure 12 is formed such that the upper dash panel 22 and the cowl panel 13 cooperate to have an open cross-sectional shape (a tub shape) in which only a central portion in the vehicle width direction has a concave space 13S, an orthogonal cross section of which in the vehicle width direction is opened upward over an entire length thereof. Both outer end portions in the vehicle width direction of the concave space 13S of such a cowl structure 12 are opened outward in the vehicle width direction.

In this way, as illustrated in FIG. 8, the cowl structure 12 allows water, which has been dropped from the front windshield into the concave space 13S only provided in a central portion in the vehicle width direction via the cowl grill, to flow outward in the vehicle width direction along the lower surface portion 131 and to be discharged to the outer side from the outer end of the concave space 13S in the vehicle width direction.

### (Auxiliary Machines Near Front Side of Dash Panel 2)

As illustrated in FIGs. 5 and 8, an electric brake booster B as an auxiliary machine is disposed in a portion that is located on one side (the vehicle body right side of the vehicle body in the present example of a right-hand drive vehicle) in the vehicle width direction of the cowl panel 13, which is only disposed in the central portion in the vehicle width direction, near the front side of the dash panel 2 and that is at the same height as the cowl panel 13. From the front surface side of the dash panel 2, a rear surface portion of the electric brake booster B is attached to an attachment space 215 that is provided in the dash panel 2.

Furthermore, as illustrated in FIG. 5, at a position near the front side of the dash panel 2 and directly above (near an upper side of) the electric brake booster B, a motor M, a pivot P, a drive transmission link L, and the like are disposed as a drive unit for swingably driving a wiper blade WB that is provided in a wiper device WU as an auxiliary machine.

### (Overall Front Frame 14)

As illustrated in FIGs. 1, 2, and 7, the front frame (also referred to as a front side frame) 14 is a vehicle body rigid member that extends in the front-rear direction from a front surface of the dash panel 2 on each of the left and right sides of the power unit room PR in the front space on the front side of the dash panel 2.

In addition, as illustrated in FIG. 7, a crash can 37 as a shock absorbing member is attached to a front end portion of the front frame 14 via a set plate 35 and a bracket 36, and a bumper beam 38 that has a closed cross-section extending in the vehicle width direction is coupled between front end portions of a pair of the left and right crash cans 37.

As illustrated in FIGs. 2, 3, 6, and 7, the front frame 14 includes: a front frame corresponding portion 141 that corresponds to a part of the front frame 14 in a cast body 500 described below; and a closed cross-sectional frame portion 142 that is made of a steel sheet.

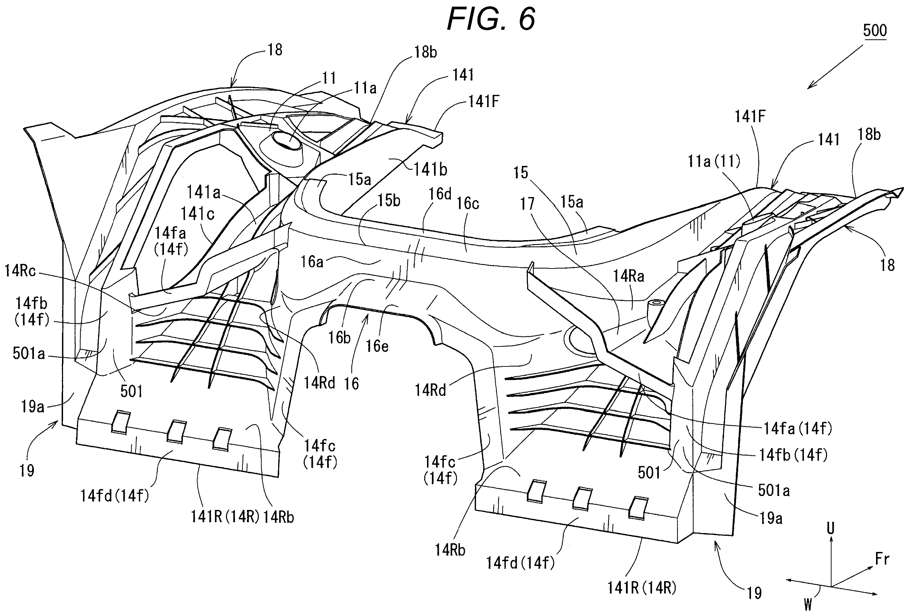

As illustrated in FIGs. 6 and 7, the front frame corresponding portion 141 is integrally formed as a part of the cast body 500 by a front frame corresponding rear portion 141R that extends from the front surface of the dash panel 2 to the front of the vehicle and a front frame corresponding front portion 141F that further extends forward from a front side position of the front frame rear portion 14R.

### (Closed Cross-Sectional Frame Portion 142)

As illustrated in FIGs. 3 and 7, the closed cross-sectional frame portion 142 extends linearly in the front-rear direction at a position immediately below the front frame corresponding front portion 141F, has a rear end portion that abuts against the rib 143 in the lower portion of the front end portion of the front frame corresponding rear portion 141R, and is attached to the front frame corresponding front portion 141F via fastening members (not illustrated) in two front and rear attachment portions 144.

In this way, both of the front frame corresponding front portion 141F and the closed cross-sectional frame portion 142 are arranged in parallel on the upper and lower sides along the front-rear direction. Then, the closed cross-sectional frame portion 142 that has a shock absorbing function of a frontal collision load is supported by the front frame corresponding front portion 141F from above.

That is, the front frame corresponding front portion 141F as the cast body 500 and the closed cross-sectional frame portion 142 made of the steel sheet cooperate with each other to constitute the front frame front portion 14F that further extends forward from a front end position of the front frame corresponding rear portion 141R as the front frame rear portion 14R.

In addition, the closed cross-sectional frame portion 142 is disposed in series with the front frame corresponding rear portion 141R in the front-rear direction by abutting the rear end portion thereof against the rib 143 in the front end portion of the front frame corresponding rear portion 141R (the front frame rear portion 14R) (see the drawings).

Furthermore, the closed cross-sectional frame portion 142 is made of steel sheets and has a closed cross-section (not illustrated) having a hollow shape (a so-called monaka shape, i.e. a sandwich structure with core cavity) in which a cross-sectional shape orthogonal to the front-rear direction formed by joining end portions of the plural steel sheets is a rectangular shape longer in the up-down direction than the vehicle width direction.

The closed cross-sectional frame portion 142 serves not only as a part of the front frame 14 but also as an upper arm support frame (the upper front-rear member as a sub frame upper side frame portion) provided in the front subframe 300.

### (Front Frame Rear Portion 14R)

As illustrated in FIG. 6, the front frame corresponding rear portion 141R is cast (formed) into a rearward-opened box shape that is opened rearward as a part of the cast body 500.

More specifically, as illustrated in FIGs. 4, 5, 6, and 7, the front frame rear portion 14R includes an upper wall portion 14Ra, a lower wall portion 14Rb separated downward from the upper wall portion 14Ra, an outer wall portion 14Rc coupling, in the up-down direction, outer end portions of the upper wall portion 14Ra and the lower wall portion 14Rb in the vehicle width direction, and an inner wall portion 14Rd coupling, in the up-down direction, inner end portions of the upper wall portion 14Ra and the lower wall portion 14Rb in the vehicle width direction.

Furthermore, the front frame rear portion 14R is cast (formed) in a rearward enlarged shape in which an inner diameter and an outer diameter thereof in the up-down direction are gradually increased toward a rear end portion. That is, the front frame rear portion 14R is formed in a trumpet shape that is opened rearward while being gradually expanded rearward.

### (Rear End Flange Portion 14f of Front Frame Rear Portion 14R)

As illustrated in FIG. 6, a rear end portion of the front frame rear portion 14R is formed with, as the rear end flange portion 14f along a peripheral edge of a rear opening, an upper wall rear end flange portion 14fa, an outer wall rear end flange portion 14fb, an inner wall rear end flange portion 14fc, and a lower wall rear end flange portion 14fd.

The upper wall rear end flange portion 14fa is formed to protrude upward from a rear end of the upper wall portion 14Ra of the front frame rear portion 14R along the rear end. The outer wall rear end flange portion 14fb is formed to protrude outward from a rear end of the outer wall portion 14Rc of the front frame rear portion 14R toward the vehicle width outer side along the rear end. The inner wall rear end flange portion 14fc is formed to protrude from a rear end of the inner wall portion 14Rd of the front frame rear portion 14R to the vehicle width inner side along the rear end. The lower wall rear end flange portion 14fd is formed to protrude downward from a rear end of the lower wall portion 14Rb of the front frame rear portion 14R along the rear end.

As illustrated in FIGs. 2, 4, and 5, the above-described rear end flange portion 14f of the front frame corresponding rear portion 141R is mainly joined to the front surface of the dash panel 2 of a cabin front surface portion 700 that includes the dash panel 2 and will be described below.

Here, as illustrated in FIGs. 5 and 8, the attachment space 215 for the electric brake booster B as the auxiliary machine, which is attached to the front surface of the dash panel 2, is provided above the upper wall rear end flange portion 14fa, which is formed to protrude upward from the rear end of the upper wall portion 14Ra of the front frame corresponding rear portion 141R.

More specifically, the front frame corresponding rear portion 141R is disposed directly below the electric brake booster B such that a lower end of the electric brake booster B (that is, the attachment space 215 for the electric brake booster B) is located above an upper end of the upper wall rear end flange portion 14fa. In this way, without interference between the upper wall rear end flange portion 14fa of the front frame corresponding rear portion 141R and the electric brake booster B in a state of being attached to the front surface of the dash panel 2, layout properties of both thereof can be achieved.

Next, the inner wall portion 14Rd of the front frame corresponding rear portion 141R will be described in detail. As illustrated in FIGs. 2, 4, 5, 6, 7, and 8, the inner wall portion 14Rd is formed in a vertical wall shape to face the power unit room PR on a vehicle width central portion side. This inner wall portion 14Rd is formed such that a vertical width thereof is increased to the rear, and is formed to be bent in an arch shape toward the center side in the vehicle width direction in conjunction with the rearward displacement to the vehicle width inner side as described above.

A bridge portion 16 is formed between the left and right front frame corresponding rear portions 141R in the vehicle width direction such that the rear portion of the inner wall portion 14Rd extends across the tunnel opening 2A of the dash panel 2. Details of the bridge portion 16 will be described below.

As illustrated in FIGs. 4, 5, 6, and 8, an inward bent protruding piece 15 that is bent inward is formed in an upper end portion of the inner wall portion 14Rd of the front frame corresponding portion 141. In addition, an inward extending portion 15a that extends horizontally and inward in the vehicle width direction from an upper end portion of the inward bent protruding piece 15 is integrally formed in the rear portion of the inner wall portion 14Rd of the front frame corresponding portion 141.

This inward bent protruding piece 15 has an upward protruding length that is increased from an intermediate portion in the front-rear direction of the inner wall portion 141c of the front frame corresponding front portion 141F to the rear end portion, and is formed continuously in the front-rear direction from the inner wall portion 14Rd of the front frame corresponding rear portion 141R until reaching the bridge portion 16 while maintaining a predetermined protruding length.

Then, since the inward bent protruding piece 15 is formed in the inner wall portion 14Rd of the front frame corresponding portion 141, a ridgeline portion 15b is formed along a base end portion of the inward bent protruding piece 15. The ridgeline portion 15b is formed continuously in the front-rear direction along the inner wall portion 14Rd of the front frame corresponding portion 141 from the intermediate portion of the front frame corresponding front portion 141F until reaching the bridge portion 16, and thereby reinforces the inner wall portion 14Rd.

Next, the upper wall portion 14Ra of the front frame corresponding rear portion 141R will be described in detail. As illustrated in FIGs. 4, 6, and 8, a vehicle width inner end of the upper wall portion 14Ra that extends in the vehicle width direction is integrally coupled to an intermediate portion of the inner wall portion 14Rd in a vertical wall shape in the up-down direction. The upper wall portion 14Ra is coupled to the intermediate portion of such an inner wall portion 14Rd in the up-down direction over a total length of the front frame corresponding rear portion 141R in the front-rear direction. In this way, the upper wall portion 14Ra supports the inner wall portion 14Rd in a vertical wall shape in a manner to prevent falling thereof.

As illustrated in FIGs. 2, 6, and 8, as described above, the upper wall portion 14Ra is formed such that the width thereof is increased rearward due to the formation of the front frame rear portion 14R in the rearward enlarged shape. In this way, at least an inner portion in the vehicle width direction of the rear portion of the upper wall portion 14Ra extends to the vehicle width inner side from the outer end portions on the sides corresponding to the left and right sides in the vehicle width direction of the cowl panel 13.

As illustrated in FIGs. 2, 4, 5, 6, and 8, an upper surface of the upper wall portion 14Ra is formed in a shape that descends and is inclined outward in the vehicle width direction from the inner portion in the vehicle width direction to the outer portion in the vehicle width direction. That is, the upper surface of the upper wall portion 14Ra is gradually lowered from the inner portion in the vehicle width direction to the outer portion in the vehicle width direction. Accordingly, as illustrated in FIG. 8, the upper wall portion 14Ra receives water, which is dropped from the outer end portion of the cowl panel 13 in the vehicle width direction, by the inner portion in the vehicle width direction of the rear portion arranged directly below the outer end portion in the vehicle width direction, causes water to flow along the upper surface to the inner side and the outer side in the vehicle width direction, and discharges water from an outer rear end portion in the vehicle width direction.

That is, as illustrated in FIG. 8, the cowl structure 12 in the gutter shape and the upper wall portion 14Ra of the front frame corresponding rear portion 141R can cooperate with each other to form a flow path FP, through which water dropped from the front windshield flows to the outer side in the vehicle width direction in the vehicle body front portion while bypassing the electric brake booster B and the wiper device WU as the auxiliary machines from below, and finally, can discharge water flowing through the flow path FP to the outer side of the power unit room PR in the vehicle width direction and to the outer side and the rear side of the front wheel in the vehicle width direction.

As illustrated in FIGs. 3, 6, and 7, a base portion (the rear portion) of the front frame corresponding front portion 141F is shaped to move upward to the front as described above. Accordingly, an upper surface of the base plate portion 141a, which constitutes the upper surface of the front frame corresponding front portion 141F, is gradually inclined downward to the rear in a manner to be continuous with the upper surface of the upper wall portion 14Ra of the front frame corresponding rear portion 141R in the front-rear direction.

In this way, it is possible to inhibit water, which is dropped from the cowl structure 12 onto the upper surface of the upper wall portion 14Ra of the front frame corresponding rear portion 141R, from flowing to the front frame corresponding front portion 141F side.

In addition, as illustrated in FIGs. 4, 5, 6, and 8, as described above, the upper wall portion 14Ra is formed in the inclined shape that descends toward the vehicle width outer side over the entire vehicle width direction, and an intermediate portion thereof in the vehicle width direction is formed with a stepped inclined portion 17 that descends toward the vehicle width outer side more rapidly than the entire inclined shape in the vehicle width direction.

The stepped inclined portion 17 is continuously formed over the entire length of the upper wall portion 14Ra in the front-rear direction, and accordingly, as illustrated in FIG. 8, upper end and lower end portions of the stepped inclined portion 17 are respectively formed with ridgeline portions 171, 172 that extend along the front-rear direction. Strength of the upper wall portion 14Ra is enhanced by these upper and lower ridgeline portions 171, 172.

### (Details of Bridge Portion 16)

As illustrated in FIGs. 2, 4, 5, and 7, as described above, the bridge portion 16 bridges the rear portions of the inner wall portions 14Rd of the left and right front frame corresponding portions 141 in the vehicle width direction along upper side portions 2Aa, 2Ab of the tunnel opening 2A of the dash panel 2. The bridge portion 16 is formed in the arch shape in vehicle front view and the plan view in a manner to protrude upward to a center thereof in the vehicle width direction and protrude rearward to the center thereof in the vehicle width direction, and is joined from the front side and the lower side to the upper side portions 2Aa, 2Ab of the tunnel opening 2A of the dash panel 2.

More specifically, as illustrated in FIG. 6, the bridge portion 16 is integrally formed along the vehicle width direction by a front wall portion 16a along the up-down direction, a lower wall portion 16b extending rearward from a lower end of the front wall portion 16a, an inclined surface 16c extending upward and forward from an upper end of the front wall portion 16a, a forward extending portion 16d extending horizontally and forward from an upper end of the inclined surface 16c, and a rear end flange portion 16e extending rearward from a rear end of the lower wall portion 16b.

As illustrated in FIGs. 4 and 5, in the bridge portion 16, since the inclined surface 16c is coupled to the front surface 2Aa of the upper side portion of the tunnel opening in the dash panel 2, and the rear end flange portion 16e is coupled to the lower surface 2Ab of the upper side portion of the tunnel opening of the dash panel 2, as illustrated in FIG. 7, a closed cross-section 16S that extends in the vehicle width direction is formed between it and the front surface 2Aa of the upper side portion of the tunnel opening in the dash panel 2.

Here, as described above, the front end portion 41a of the upper tunnel frame 41 is joined to the upper side portions 2Aa, 2Ab of the tunnel opening of the dash panel 2 from the cabin inner side (see FIG. 5). That is, the front end portion 41a of the upper tunnel frame 41 and the bridge portion 16 substantially coincide with each other in the front view. In this way, the closed cross-section 16S of the bridge portion 16 and the closed cross-section 41S of the upper tunnel frame 41 extend continuously in the front-rear direction via the dash panel 2.

As illustrated in FIG. 6, in the inclined surface 16c of the bridge portion 16 along the vehicle width direction, both outer end portions thereof in the vehicle width direction smoothly continue along the vehicle width direction with an inward bent protruding piece 15 of the front frame corresponding rear portion 141R on both of the sides in the vehicle width direction.

Furthermore, in the forward extending portion 16d of the bridge portion 16 along the vehicle width direction, both outer end portions thereof in the vehicle width direction smoothly continue along the vehicle width direction with inward extending portions 15a of the front frame corresponding rear portion 141R on both of the sides in the vehicle width direction.

Then, as illustrated in FIGs. 1 and 8, a lower surface portion 131 of the tub-shaped cowl structure 12 is joined from above to the forward extending portion 16d of the bridge portion 16 and the inward extending portion 15a of the inner wall portion 14Rd of the left and right front frame corresponding rear portion 141R. In this way, the cowl panel 13 is supported by the forward extending portion 16d and the inward extending portions 15a on the left and right sides of the forward extending portion 16d.

### (Apron Frame 18)

As illustrated in FIGs. 1, 4, and 7, the apron frame 18 is disposed along the front-rear direction at a position above and the outer side in the vehicle width direction of each of the paired left and right front frames 14 extending in the front-rear direction. In a manner to be substantially linearly with the cowl side rein 8 in the vehicle front-rear direction, the apron frame 18 passes the vehicle outer side of the suspension housing 11 from the cowl side rein 8, and a front end portion thereof extends in the front direction.

The apron frame 18 includes an apron frame body portion 181, an upper surface plate member 182 provided above the apron frame body portion 181, and a lower member 183 provided below the apron frame body portion 181. In other words, the apron frame 18 is divided into an apron rear region 18R extending forward from the cowl side rein 8 and an apron front region 18F extending further forward from a front end of the apron rear region 18R.

Each of the apron frame body portion 181 and the upper surface plate member 182 is continuously provided over an entire length of the apron frame 18 including the apron rear region 18R and the apron front region 18F. Meanwhile, the lower member 183 is provided only in the apron rear region 18R.

### (Apron Support Frame 19)

As illustrated in FIGs. 1, 3, and 7, an apron support frame 19 is a frame that supports the apron frame 18 at a position immediately below a rear region of the apron frame 18, and is formed as an outer bracing rein that couples the apron frame 18 and the cabin front surface portion 700 in the bracing manner on the vehicle width outer side of the cowl side rein 8 as an inner bracing rein.

The apron support frame 19 is integrally formed as a part of the cast body 500.

### (Cast Body 500)

As illustrated in FIGs. 5, 6, and 7, the vehicle body attachment portion (not denoted by a reference sign) of the apron support frame 19 and the outer wall portion 14Rc of the front frame rear portion 14R as a rearward enlarged portion described above are spaced apart from each other in the vehicle width direction. Between the vehicle body attachment portion and the outer wall portion 14Rc of the front frame rear portion 14R, the above-described cast body 500 includes a coupling margin portion 501 that couples these in the vehicle width direction.

As illustrated in the drawings, also in a rear end portion of the coupling margin portion 501, a rear end flange portion 501a that is joined to the cabin front surface portion 700 is formed along the up-down direction. At the same height in the vehicle width direction, this rear end flange portion 501a is adjacent to the rear end flange portion on the vehicle width inner side of the paired rear end flange portions in the upper portion of the vehicle body attachment portion, and is integrally formed therewith.

In short, as illustrated in FIG. 6, the cast body 500 includes the pair of the left and right front frame corresponding portions 141, the pair of the left and right apron frame body portions 181, the pair of the left and right apron support frames 19, the pair of the left and right suspension housings 11, the pair of the left and right coupling margin portions 501, and the bridge portion 16.

The cast body 500 is made of an aluminum alloy, in which these elements are integrally molded, as a relatively large single component that is also referred to as a gigacast having these elements (modules).

### (Joining of Cast Body 500 to Cabin Front Surface Portion 700)

As described above, the rear end portions of the front frame corresponding portion 141, the apron frame body portion 181, the apron support frame 19, the bridge portion 16, and the coupling margin portion 501 in the cast body 500 are respectively provided with the rear end flange portions 14f, 16c, 16d, 16e, 181h, 181i, 19a, 501a (hereinafter referred to as the rear end flange portion 14f...) as coupled portions, each of which abuts and is coupled to the cabin front surface portion 700 from the front (see FIG. 6).

Here, the cabin front surface portion 700 is a front surface portion of the box-shaped cabin structure 1A that constitutes the cabin in a manner to face the front space of the vehicle body, and the above-described rear end flange portions 14f... of the cast body 500 provided in the front space are joined thereto from the front. The cabin front surface portion 700 mainly includes front end portions of the side sill 5, the tunnel frame 4 (the upper tunnel frame 41 and the tunnel side frame 42), the hinge pillar 7, and the front pillar 6, the dash panel 2, the torque box 9, the dash lower rein 10, and the cowl side rein 8. Among the elements of the cabin front surface portion 700, the elements other than the dash panel 2 are provided as vehicle body reinforcing members.

Then, the rear end flange portion 14f... of the cast body 500 is joined to the above-described cabin front surface portion 700 from the front such that at least some thereof coincide with the vehicle body reinforcing members provided in the cabin front surface portion 700 in the front view.

### (Manufacturing Method of Cast Body 500)

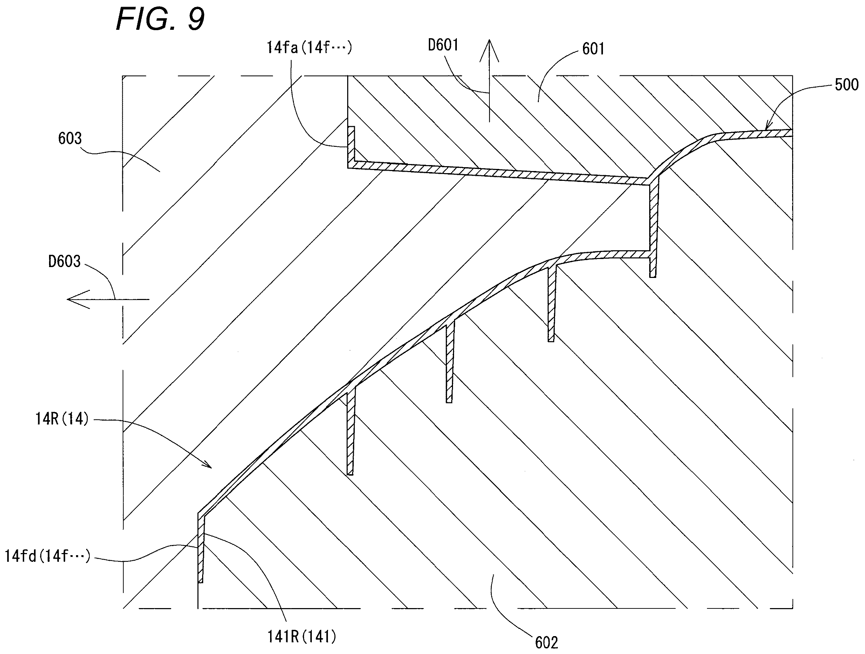

As illustrated in FIG. 9, the above-described cast body 500 is molded (cast) by using at least three molds: an upper mold 601 and a lower mold 602 that oppose each other on the upper and lower sides; and a rear punching mold 603 that slides in a different direction (D603) from a mold opening/closing direction (D601) of these upper mold 601 and lower mold 602. In this example, the lower mold 602 is a fixed mold, the upper mold 601 is a movable mold, the rear punching mold 603 is formed as a punching core, and a drive device and a drive transmission unit for the upper mold 601 and the rear punching mold 603 are not illustrated.

When the cast body 500 is cast, first, the three molds that are the lower mold 602, the upper mold 601, and the rear punching mold 603 are combined to form a cavity among these three molds for molding the cast body 500. When molten metal poured into the cavity among the three molds is solidified, the cast body 500 as a workpiece is removed.

The rear punching mold 603 in the solidified state of the molten metal is brought into a state of being embedded in the front frame corresponding rear portions 141R while at least a part thereof is inserted in the left and right front frame corresponding rear portions 141R of the cast body 500 from behind.

When the cast body 500 is removed from the mold, the upper mold 601 is slid upward with respect to the lower mold 602, and the rear punching mold 603 is slid in a different direction from the up-down direction, which is the slide direction of the upper mold 601, more specifically, in the rear direction that is orthogonal to the slide direction of the upper mold 601 in the vertical cross-sectional view. In this way, the cast body 500 is obtained.

More specifically, first, since the cast body 500 is removed by sliding the upper mold 601 upward with respect to the lower mold 602 as described above, the lower mold 602 and the upper mold 601 are formed to have an opened cross-sectional shape (an upper opened cross-sectional shape and a lower opened cross-sectional shape) in which both of the front frame corresponding portion 141 and the apron frame 18 are opened in the up-down direction. Furthermore, when the cast body 500 is cast, for example, the front frame corresponding portion 141 and the apron frame 18 can be appropriately formed with the ribs, each of which protrudes in the up-down direction, along the front-rear direction and the vehicle width direction.

Moreover, in regard to the rear punching mold 603, as described above, the rear punching mold 603 is slid in the rear direction, which is a different direction from the up-down direction as the slide direction of the upper mold 601, for removal, and it is thereby possible to eliminate a concave portion (a portion that becomes an undercut) that does not come out in the mold opening direction of the upper mold 601. Accordingly, as illustrated in FIG. 9, the cast body 500 can have the box shape in which the front frame corresponding rear portion 141R is gradually enlarged toward the rear end and which is opened rearward.

### (Operational Effects of Vehicle 1 in Present Embodiment)

As illustrated in FIGs. 1 and 5, the vehicle body structure of the vehicle 1 in the present embodiment includes: the dash panel 2 that separates the cabin CR and the power unit room PR provided in front of the cabin CR from each other in the vehicle front-rear direction; a pair of left and right front frames 14, which extends in the vehicle front direction from the dash panel 2, and the rear end portions of which are joined to the dash panel 2 from the front; the cowl structure 12 that is provided along the vehicle width direction as the gutter for receiving water flowing along the front windshield on the central side of the pair of the left and right front frames 14 in the vehicle width direction; and the wiper device WU and the electric brake booster B as the auxiliary machines, which at least partially coincide with the cowl structure 12 in the up-down direction and the front-rear direction in front of the dash panel 2, and which are provided on the outer side in the vehicle width direction of the outer end portion in the vehicle width direction of the cowl structure 12.

As illustrated in FIGs. 5 and 8, of the pair of the left and right front frames 14, the upper wall portion 14Ra constituting the upper surface portion in the rear portion (14R) of the front frame 14 on the side provided near the auxiliary machine (in this example, the vehicle right side) is provided below the lower end of the electric brake booster B, and as illustrated in FIG. 8, the upper wall portion 14Ra is provided along the outer side of the auxiliary machine in the vehicle width direction from the outer end portion in the vehicle width direction of the cowl structure 12 so as to constitute the flow path FP, through which water flowing down from the cowl structure 12 is discharged to the outside of the vehicle body.

According to the configuration, the rear end portion (14f) of the rear portion (14R) of the front frame 14 can be joined to the dash panel 2 from the front side without interfering with the auxiliary machine, and the layout of the wiper device WU, the electric brake booster B, and the flow path FP can be established.

More specifically, the wiper device WU and the electric brake booster B as the auxiliary machines are provided at substantially the same height as the cowl structure 12 on the outer side in the vehicle width direction of the cowl structure 12 provided along the vehicle width direction in front of the central portion in the vehicle width direction of the dash panel 2.

Accordingly, by providing the upper wall portion 14Ra from the outer end portion in the vehicle width direction of the cowl structure 12 along the outer side in the vehicle width direction of the auxiliary machine B directly below the auxiliary machine, it is possible to form a part of the flow path FP, which receives water discharged from the outer end portion in the vehicle width direction of the cowl structure 12 as the gutter from below, and from which water is discharged to the outside of the vehicle body on the outer side in the vehicle width direction of the auxiliary machine while bypassing the auxiliary machine B.

As described above, by forming the flow path FP for discharging water flowing along the front windshield to the outside of the vehicle body in cooperation between the cowl structure 12 and the upper wall portion 14Ra, it is possible to establish the respective layouts without the interference between the auxiliary machine and the flow path FP while securing a joint margin of the rear end portion (14f) of the front frame 14 to the front surface portion of the dash panel 2.

Furthermore, as illustrated in FIGs. 5 and 8, the auxiliary machine includes the electric brake booster B, the rear end portion (14f) of the front frame 14 on the side provided near the electric brake booster B (in the present example, the vehicle right side) includes the rear end portion (14fa) of the upper wall portion 14Ra, and the attachment space 215, in which the electric brake booster B is attached to the dash panel 2 from the front side, is provided above the rear end portion (14fa) of the upper wall portion 14Ra.

According to the configuration, since the rear end portion (14fa) of the upper wall portion 14Ra does not interfere with the attachment space 215 for the electric brake booster B to the front surface of the dash panel 2, it is possible to secure the joint margin that is required when the rear end portion (14fa) is joined to the dash panel 2 from the front side.

As illustrated in FIGs. 5 and 8, the inner end portion in the vehicle width direction of the upper wall portion 14Ra is located on the inner side in the vehicle width direction of the outer end portion in the vehicle width direction of the cowl structure 12, and the upper wall portion 14Ra is configured to descend from the inner end portion in the vehicle width direction toward the outer side in the vehicle width direction.

According to the configuration, since the inner end portion in the vehicle width direction of the upper wall portion 14Ra is located on the inner side in the vehicle width direction of the outer end portion in the vehicle width direction of the cowl structure 12, water discharged from the outer end portion in the vehicle width direction of the cowl structure 12 as the gutter can be reliably received by the upper wall portion 14Ra from below.

As illustrated in the drawings, since the upper wall portion 14Ra is configured to descend from the inner end portion in the vehicle width direction toward the outer side in the vehicle width direction, it is possible to reliably cause received water to flow along the upper wall portion 14Ra to the outer side in the vehicle width direction of the auxiliary machine B and thus to discharge water to the outside of the vehicle body.

As illustrated in the drawings, the upper wall portion 14Ra is formed in an inclined surface shape that descends toward the outer side in the vehicle width direction, and the stepped inclined portion 17 that descends toward the outer side in the vehicle width direction more rapidly than an inclination angle of a peripheral portion of the intermediate portion is formed continuously along the front-rear direction in the intermediate portion in the vehicle width direction of the upper wall portion 14Ra.

According to the configuration, since the stepped inclined portion 17 that continues along the front-rear direction is formed in the intermediate portion of the upper wall portion 14Ra in the vehicle width direction, it is possible to form the ridgeline portions (171, 172) that continue along the stepped inclined portion 17. Thus, the strength of the upper wall portion 14Ra can be enhanced. Thus, when the frontal collision load is transmitted rearward in the rear portion (14R) of the front frame 14, it is possible to efficiently transmit it along the ridgeline portions (171, 172) that continue along the front-rear direction in the upper wall portion 14Ra.

As illustrated in FIGs. 6 and 8, the front frame front portion 14F is integrally formed to have the H-shaped orthogonal cross section in the front-rear direction by the base plate portion 141a, which is gradually displaced upward to the front from the front end of the upper wall portion 14Ra, and the side wall portions (the inner wall portion 141c and the outer wall portion 141b), which extend in the up-down direction from both of the end portions in the vehicle width direction of the base plate portion 141a.

According to the above configuration, the base plate portion 141a of the front frame front portion 14F can be provided at a higher position than the upper wall portion 14Ra of the front frame rear portion 14R, and can gradually descend rearward toward the front end of the upper wall portion 14Ra. Thus, even the base plate portion 141a is exposed to water, water can flow to the upper wall portion 14Ra, and drainage performance of the front frame front portion 14F can be enhanced.

In addition, since the front frame front portion 14F is formed to have the H-shaped orthogonal cross section in the front-rear direction, even in the case where the load that promotes deformation in a rising direction acts when the front frame front portion 14F, which receives the frontal collision load during the frontal collision, moves rearward, it can resist the load.

As illustrated in FIGs. 2, 6, 7, and 8, the pair of the left and right front frames 14 is formed with the inner wall portions 14Rd, each of which extends in the up direction from the inner end in the vehicle width direction of the upper surface portion, the pair of the left and right inner wall portions 14Rd is formed as the bridge portion 16 formed to be bent in the arch shapes toward the central portion in the vehicle width direction to the rear of the vehicle and are joined to each other in the central portion in the vehicle width direction, and the cowl panel 13 provided in the cowl structure 12 is joined in a state of being mounted on the bridge portion 16.

According to the configuration, the cowl panel 13 provided in the central portion in the vehicle width direction can be supported by the bridge portion 16. Accordingly, since the cowl panel 13 can be prevented from falling from a predetermined position due to vibration or the like during travel of the vehicle, for example, water flowing along the front windshield can further reliably be received by the cowl structure 12.

Furthermore, since the length of the cowl panel 13 in the vehicle width direction can be made at least equal to or shorter than the length of the bridge portion 16 in the vehicle width direction, it is possible to secure the larger space for arranging the auxiliary machines.

In correspondence with the configuration of the invention and the above-described embodiment, the cabin in the invention corresponds to the cabin CR. Similarly, the front space corresponds to the power unit room PR, the dash panel corresponds to the dash panel 2, the front frame corresponds to the front frame 14, the cowl structure corresponds to the cowl structure 12, the auxiliary machines correspond to the wiper device WU and the electric brake booster B, the upper surface portion near the auxiliary machine corresponds to the upper surface portion of the upper wall portion 14Ra, the drain path corresponds to the flow path FP, the electric brake booster corresponds to the electric brake booster B, the attachment region corresponds to the attachment space 215, the stepped descending portion corresponds to the stepped inclined portion 17, and the front portion of the front frame corresponds to the front frame front portion 14F, the base plate portion corresponds to the base plate portion 141a, the side wall portion corresponds to the inner wall portion 141c and the outer wall portion 141b, the inner wall portion corresponds to the inner wall portion 14Rd, the bridge portion corresponds to the bridge portion 16, the cowl panel corresponds to the cowl panel 13, and the vehicle corresponds to the vehicle 1. However, the invention is not limited to the configuration in the above-described embodiment, and many embodiments can be obtained.

### [Reference Signs List]

1: vehicle
2: dash panel
12: cowl structure
13: cowl panel
14: front frame 14
14F: front frame front portion
14Ra: upper wall portion
14Rd: inner wall portion
16: bridge portion
17: stepped inclined portion
141a: base plate portion
141b: outer wall portion
141c: inner wall portion
215: attachment space
B: electric brake booster
CR: cabin
PR: power unit room
FP: flow path

## Claims

1. A vehicle body structure of a vehicle (1) comprising:
a dash panel (2) that separates a cabin (CR) and a front space in front of the cabin (CR) from each other in a vehicle front-rear direction;
a pair of left and right front frames, which extend in a vehicle front direction from the dash panel (2), and rear end portions of which are joined to the dash panel (2) from a front side;
a cowl structure (12) provided along a vehicle width direction as a gutter that receives water flowing along a front windshield on a central side in the vehicle width direction of the pair of the left and right front frames; and
an auxiliary machine that at least partially coincides with the cowl structure (12) in an up-down direction and the front-rear direction in front of the dash panel (2) and is provided on an outer side in the vehicle width direction of an outer end portion in the vehicle width direction of the cowl structure (12), wherein
an upper surface portion, which is near the auxiliary machine and constitutes an upper surface portion of the front frame (14) on a side provided near the auxiliary machine among rear portions of the pair of left and right front frames, is provided below a lower end of the auxiliary machine, and
the upper surface portion near the auxiliary machine is provided along the outer side in the vehicle width direction of the auxiliary machine from the outer end portion in the vehicle width direction of the cowl structure (12) in a manner to constitute a drain path, from which water flowing down from the cowl structure (12) is discharged to the outside of a vehicle body.

2. The vehicle body structure of the vehicle (1) according to claim 1, wherein
the auxiliary machine includes an electric brake booster (B),
the rear end portion of the front frame (14) on the side provided near the auxiliary machine includes a rear end portion of the upper surface portion near the auxiliary machine, and
an attachment region, in which the electric brake booster (B) is attached to the dash panel (2) from a front side, is provided above the rear end portion of the upper surface portion near the auxiliary machine.

3. The vehicle body structure of the vehicle (1) according to claim 1, wherein
an inner end portion in the vehicle width direction of the upper surface portion near the auxiliary machine is located on an inner side in the vehicle width direction of the outer end portion in the vehicle width direction of the cowl structure (12), and
the upper surface portion near the auxiliary machine is configured to descend toward the outer side in the vehicle width direction from the inner end portion in the vehicle width direction.

4. The vehicle body structure of the vehicle (1) according to claim 3, wherein
the upper surface portion near the auxiliary machine is formed in an inclined surface shape that descends toward the outer side in the vehicle width direction, and
in an intermediate portion in the vehicle width direction of the upper surface portion near the auxiliary machine, a stepped descending portion that descends toward the outer side in the vehicle width direction more rapidly than an inclination angle of a peripheral portion of the intermediate portion is continuously formed along the front-rear direction.

5. The vehicle body structure of the vehicle according to claim 1, wherein
a front portion (14F) of the front frame (14) is integrally formed to have an H-shaped orthogonal cross section in the front-rear direction by a base plate portion (141a) gradually displaced upward to the front from a front end of the upper surface portion near the auxiliary machine and a side wall portion extending in the up-down direction from both end portions in the vehicle width direction of the base plate portion (141a).

6. The vehicle body structure of the vehicle (1) according to claim 1, wherein
the pair of the left and right front frames is formed with the inner wall portions (14Rd), each of which extends in an up direction from an inner end in the vehicle width direction of the upper surface portion,
the pair of the left and right inner wall portions (14Rd) is formed as bridge portions (16) that are formed to be bent in arch shapes toward a central portion in the vehicle width direction to the rear of the vehicle and are joined to each other in the central portion in the vehicle width direction, and
a cowl panel (13) provided in the cowl structure (12) is joined in a state of being mounted on the bridge portion (16).

7. The vehicle body structure of the vehicle (1) according to any one of the preceding claims, wherein the auxiliary machine is provided at substantially the same height as the cowl structure (12) on the outer side in the vehicle width direction of the cowl structure (12) provided along the vehicle width direction in front of the central portion in the vehicle width direction of the dash panel (2).

8. The vehicle body structure of the vehicle (1) according to any one of claims 4 to 7, wherein the stepped descending portion that continues along the front-rear direction is formed in the intermediate portion in the vehicle width direction of the upper surface portion near the auxiliary machine.

9. The vehicle body structure of the vehicle (1) according to any one of claims 5 to 8, wherein the base plate portion (141a) of the front portion (14F) of the front frame (14) is provided at a higher position than the upper surface portion near the auxiliary machine.

10. The vehicle body structure of the vehicle according to claim 9, wherein the base plate portion (141a) of the front portion (14F) of the front frame (14) gradually descends rearward toward the front end of the upper surface portion near the auxiliary machine.

11. The vehicle body structure of the vehicle (1) according to any one of claims 6 to 10, wherein the length of the cowl panel (13) in the vehicle width direction is at least equal to or shorter than the length of the bridge portion (16) in the vehicle width direction.

12. The vehicle body structure of the vehicle (1) according to any one claims 6 to 11, wherein the cowl panel (13) is integrally formed by: a lower surface portion (131) that is provided in front of and in a central portion in the vehicle width direction of an upper dash panel (22) and that extends in the front-rear direction; a front vertical wall portion (132) that rises in a vertical wall shape from a front end of the lower surface portion 131; and a front upper surface portion (133) that protrudes forward from an upper end of the front vertical wall portion (132).

13. The vehicle body structure of the vehicle (1) according to any one preceding claims, wherein the cowl structure (12) includes an upper dash panel (22), a cowl panel (13) and a cowl grill.

14. The vehicle body structure of the vehicle (1) according to claim 13, wherein the cowl grill is provided across an entire length of the upper dash panel (22) in the vehicle width direction.

15. A vehicle (1) comprising a vehicle body structure according to any one of the preceding claims.
